# EUROPÄISCHE PATENTSCHRIFT

(11) **EP 2 699 797 B1**
(45) Veröffentlichungstag und Bekanntmachung des Hinweises auf die Patenterteilung: **13.04.2016**
(21) Anmeldenummer: 12720086.3
(22) Anmeldetag: 13.04.2012
(51) Int. Cl.: F03D 13/20, F03D 9/00

(54) **WINDKRAFTANLAGE**
WIND TURBINE
INSTALLATION ÉOLIENNE

(30) Priorität: 16.04.2011 DE 102011017373
(43) Veröffentlichungstag der Anmeldung: 26.02.2014
(73) Patentinhaber: Vogel, Werner, 19089 Crivitz OT Gädebehn (DE)
(72) Erfinder: Vogel, Werner, 19089 Crivitz OT Gädebehn (DE)
(86) Internationale Anmeldenummer: PCT/DE2012/100104
(87) Internationale Veröffentlichungsnummer: WO 2012/143004

(56) Entgegenhaltungen:
- JP-A- 59 046 374
- JP-A- 61 085 588
- JP-A- 2002 364 518
- US-A- 3 302 552

## Beschreibung

Die Erfindung bezieht sich auf eine Windkraftanlage nach dem Oberbegriff des Anspruchs 1. Derartige Windkraftanlagen werden zur Strömerzeugung eingesetzt.

Aufgrund steigender Energiepreise gewinnt eine rohstofffreie Energieerzeugung eine zunehmende Bedeutung. Deshalb spielen Windkraftanlagen eine zunehmend größere Rolle.
Bekannte Windkraftanlagen sind z. B. Windräder, welche aus einem auf einem Turm drehbar gelagerten Generator mit Rotorblättern und einer Windfahne bestehen, bei dem durch die Windfahne die Rotorblätter derart ausgerichtet werden, dass sie nahezu im rechten Winkel zur Luftströmung ausgerichtet sind, so dass der Generator mit seinen Rotorblättern in die entgegengesetzte Richtung der Luftströmung zeigt. Durch die Luftströmung werden die Rotorblätter in Rotation versetzt, wodurch mit dem Generator elektrische Energie erzeugt wird.
Bei diesen Windrädern ist aber von Nachteil, dass sie einerseits nur bei einer ausreichenden Windgeschwindigkeit elektrische Energie erzeugen und dass zum anderen die Windräder bei sehr hohen Windgeschwindigkeiten aufgrund von Überlastungen häufig abgeschaltet werden müssen.

Aus der DE 29 41 222 A1 ist auch eine Windkraftanlage bekannt, welches ein im Querschnitt stromlinienförmiges Gehäuse aufweist, in dem horizontal ein Generator mit Rotorblättern derart angeordnet ist, dass ein zum Antrieb der Rotorblätter erforderlicher Luftstrom von der Sögwirkung einer durch das stromlinienförmige Gehäuse beschleunigten Luft erzeugt wird, wobei diese Windkraftanlage wegen der komplizierten Geometrie des Gehäuses in seiner Herstellung teuer ist.

Weiterhin sind auch Windkraftanlagen bekannt, mit denen auch bei geringen Strömungsgeschwindigkeiten der Luftströmung elektrische Energie erzeugt werden kann. Diese Windkraftanlagen basieren auf dem Schomsteinprinzip, bei denen die obere Öffnung einer Röhre durch eine Luftströmung überströmt wird, wodurch in der Röhre eine Kamin- oder Saugwirkung entsteht. Dadurch erfolgt eine Luftströmung innerhalb der Röhre von einer unteren Lufteinlassöffnung zu der oberen Luftauslassöffnung. Innerhalb der Röhre ist quer zur Luftströmung ein Generator mit Rotorblättern derart angeordnet, dass durch die aus der Kamin- oder Saugwirkung entstehenden Luftströmung innerhalb der Röhre die Rotorblätter des Generators in Rotation versetzt werden und mit dem Generator elektrische Energie erzeugt wird.

So ist z. B. aus der DE 203 03 679 U1 eine Windkraftanlage bekannt, die in einer speziellen Ausführung ein kegelstumpfförmiges Gehäuse mit einer oberen Luftauslassöffnung und mehreren unten angeordneten Einströmkanälen aufweist, wobei in dem Gehäuse wiederum horizontal ein Generator mit Rotorblättern angeordnet ist. Von Nachteil ist aber, dass diese Lösung nur die durch die Überströmung der Luftauslassöffnung resultierende Kamin- oder Saugwirkung ausnutzt und damit uneffektiv ist.

Deshalb ist aus der DE 24 02 647 C3 eine Windkraftanlagen bekannt, bei der Generator mit seinen Rotorblättern in einer ca. 100 m langen, über einen horizontalen Drehkranz gelagerten Röhre angeordnet ist, wobei diese Röhre am unteren Ende mehrere, entsprechend der Windrichtung, einstellbare Lufteinlassöffnungen und am oberen Ende eine Saugvorrichtung aufweist. Dabei wird mit der Saugvorrichtung durch das Überströmen durch eine zweite, aus der natürlichen Luftbewegung erzeugten Luftströmung, ähnlich einer Wasserstrahlpumpe, in der Röhre ein Unterdruck erzeugt, wodurch eine erste Luftströmung über die Lufteinlassöffnungen in die Röhre einströmt, die Rotorblätter in Rotation versetzt und die Röhre über die Saugvorrichtung wieder verlässt.

Von Nachteil ist aber hierbei, dass die Saugvorrichtung technisch aufwendig und damit teuer ist.

Das Dokument JP-2002/364518 offenbart eine Windkraft-anlage mit dem Merkmalen des Oberbegriffs des Anspruchs 1.

Der Erfindung liegt daher die Aufgabe zugrunde, eine Windkraftanlage zu schaffen, bei der eine erhöhte Strömungsgeschwindigkeit in einer Röhre erreicht wird, welche technisch einfach, kostengünstig und wartungsarm ist.

Diese Aufgabe wird durch die kennzeichnenden Merkmale des Anspruchs 1 gelöst. Zweckdienliche Ausgestaltungen ergeben sich aus den Unteransprüchen 2 bis 9.

Die neue Windkraftanlagen beseitigt die genannten Nachteile des Standes der Technik. Die neue Windkraftanlage besteht im Wesentlichen aus einer Röhre mit mindestens einer unteren Lufteinlassöffnung, mindestens einer oberen Luftauslassöffnung und mindestens einem in der Röhre angeordneten und mit einem Generator verbunden Rotor mit Rotorblättern, wobei auf der Luftauslassöffnung der Röhre eine gegenüber der Röhre drehbar gelagerte Saugvorrichtung angeordnet ist. Dabei ist es bei der Anwendung der neuen Windkraftanlage von Vorteil, dass die Saugvorrichtung ein im Querschnitt tragfrächenförmiger Strömungsbeschleuniger ist, dessen obere Körperkante eine in Strömungsrichtung größere Länge als eine untere Körperkante und der oberhalb der Luftauslassöffnung eine Durchlassöffnung aufweist. Dadurch wird bei einer den Strömungsbeschleuniger umströmenden Luftströmung an der obere Körperkante der dynamische Druck erhöht und äquivalent der statische Druck verringert sowie gleichzeitig an der unteren Körperkante der dynamische Druck verringert und äquivalent der statische Druck erhöht. Das führt zu einer Erhöhung des statischen Druckes an der unteren Körperkante der Röhre und damit zu einer Erhöhung der Kamin- und Saugwirkung innerhalb der Röhre, wodurch wiederum die Strömungsgeschwindigkeit innerhalb der Röhre und in der Durchlassöffnung erhöht wird. Das hat zur Folge, dass sich auch die Rotationsgeschwindigkeit der mit dem Generator verbundenen Rotoren erhöht und dadurch die mit dem Generator erzeugte Menge an elektrischen Strom erhöht wird.
Dabei ist es von Vorteil, wenn sich die Röhre im Querschnitt von der mindestens einen unteren Lufteinlassöffnung bis zu der mindestens einen oberen Luftauslassöffnung verjüngt, weil mit der Querschnittsverengung eine Erhöhung der Strömungsgeschwindigkeit der Luftströmung in der Röhre erreicht wird.

Von Vorteil ist es auch, wenn der Strömungsbeschleuniger mindestens eine Windfahne aufweist, wodurch der Strömungsbeschleuniger parallel zur Richtung der Luftströmung ausgerichtet wird, weil dadurch der Strömungsbeschleuniger optimal in Windrichtung ausgerichtete ist. Dabei ist es von Vorteil, wenn der Strömungsbeschleuniger an seinen Seitenflächen und jeweils über die gesamte Seitenfläche des Strömungsbeschleunigers verlaufende Windfahnen aufweist, weil dadurch ein Druckausgleich zwischen der oberen und der unteren Körperkante des Strömungsbeschleunigers über diese Seitenflächen verhindert wird.

Auch ist es von Vorteil, wenn entsprechend der aus der Windgeschwindigkeit resultierenden Drehzahl der Welle zur Aufrechterhaltung einer gleichmäßigen Rotation Generatorspulen des Generators zu- oder abschaltbar sind, weil dadurch eine Begrenzung der Drehzahl der Welle unter eine kritische Drehzahl erreicht und so eine Überlastung vermieden wird.

Die neue Windkraftanlagen soll nun an einem Ausführungsbeispiel erläutert werden. Dazu zeigen:
- Fig. 1:: Schematische Darstellung der Windkraftanlagen in einer Seitenansicht,
- Fig. 2:: Schematische Darstellung der Windkraftanlagen mit einem Strömungsbeschleuniger in einer Vorderansicht,
- Fig. 3:: Schematische Darstellung der Windkraftanlage in einer vertikal geschnittenen Teilansicht,
- Fig. 4:: Schematische Darstellung der Windkraftanlage in einer horizontal geschnittenen Teilansicht,
- Fig. 5:: Schematische Darstellung der Windkraftanlage einer alternativen Ausführung des Strömungsbeschleunigers in einer Draufsicht und
- Fig. 6:: Schematische Darstellung der Windkraftanlage der alternativen Ausführung des Strömungsbeschleunigers in einer Schnittansicht.

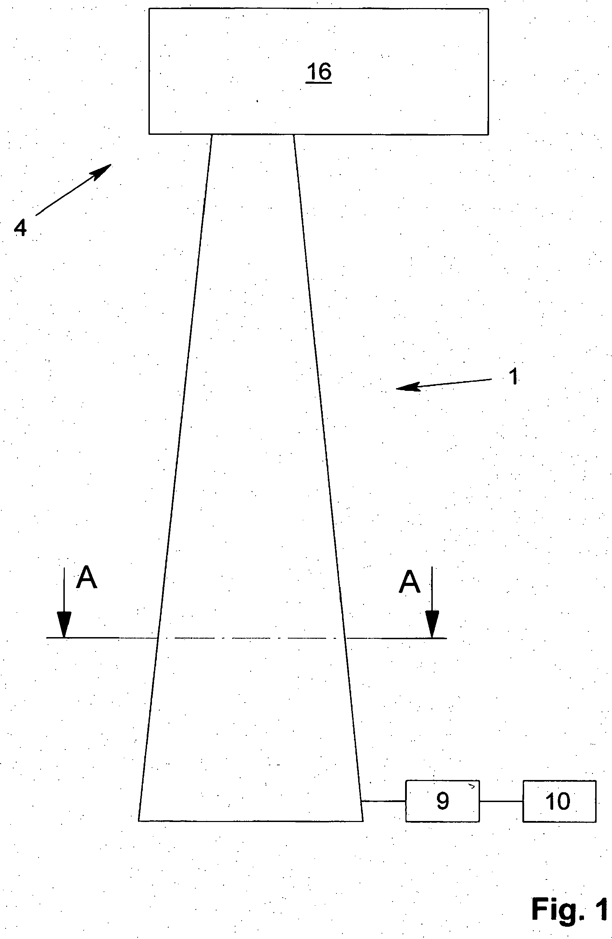

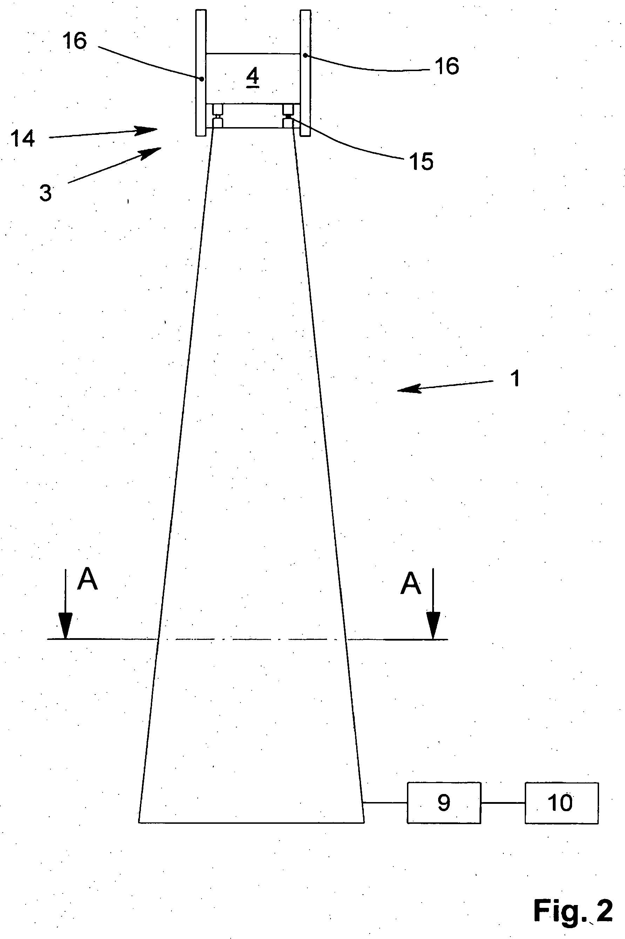

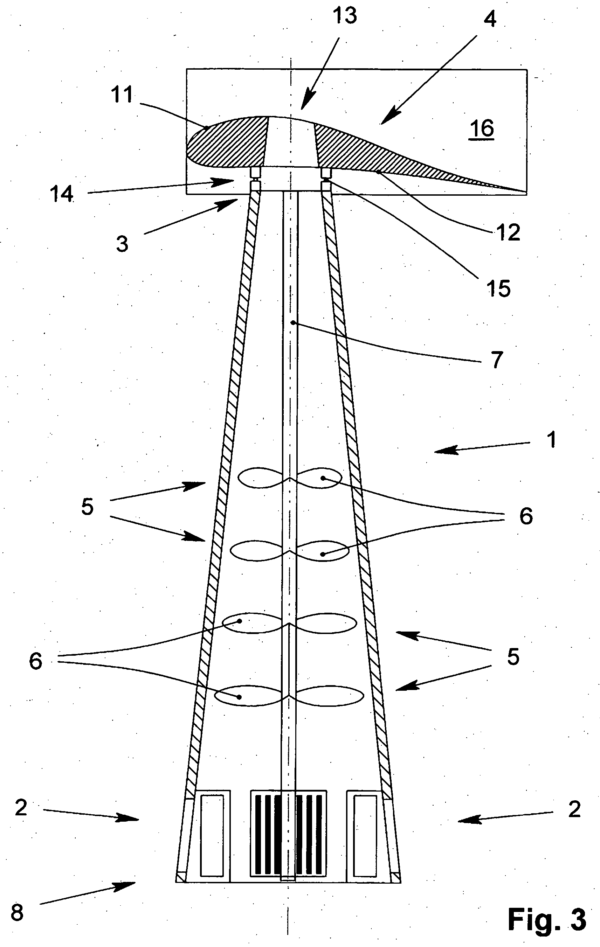

Die neue Windkraftanlage besteht gemäß der **Fig. 1** bis **Fig. 4** aus einer konzentrischen Röhre 1 mit mindestens einer unten angeordneten Lufteinlassöffnungen 2 und mindestens einer oben angeordneten Luftauslassöffnung 3 sowie einem über der Luftauslassöffnung 3 angeordneten Strömungsbeschleuniger 4. Dabei sind in der konzentrischen Röhre 1 mehrere Rotoren 5 mit jeweils mehreren Rotorblättern 6 angeordnet, die über eine Welle 7 mit einem Generator 8 verbunden sind, wobei die Stromausgänge 9 des Generators 8 über ein Schaltwerk 10 mit dem öffentlichen Stromnetz elektrisch verbunden sind.
Der Strömungsbeschleuniger 4 weist ein im Querschnitt tragflächenförmigen Querschnitt auf, dessen obere Körperkante 11 eine in Strömungsrichtung größere Länge aufweist als seine untere Körperkante 12. Oberhalb der Luftauslassöffnung 3 der konzentrischen Röhre 1 besitzt der Strömungsbeschleuniger 4 eine Durchlassöffnung 13, welche ein geringeren Durchmesser als die Luftauslassöffnung 3 der konzentrischen Röhre 1 besitzt. Dabei ist der Strömungsbeschleuniger 4 an der konzentrischen Röhre 1 über eine Halterung 14 mit einem Lager 15 derart befestigt, dass der Strömungsbeschleuniger 4 gegenüber der konzentrischen Röhre 1 horizontal drehbar gelagert ist. Zudem weist der Strömungsbeschleuniger 4 beidseitig Windfahnen 16 auf, wodurch der Strömungsbeschleuniger 4 durch eine Luftströmung parallel zu der Strömungsrichtung dieser Luftströmung ausgerichtet wird.

Die Wirkungsweise der neuen Windkraftanlage soll nachfolgend beschrieben werden. Sind die mindestens eine Lüfteinlassöffnung 2 und die mindestens eine Luftauslassöffnung 3 geöffnet, dann erzeugt eine Luftströmung oberhalb der Luftauslassöffnung 3 eine Kamin- und Saugwirkung innerhalb der konzentrischen Röhre 1, so dass innerhalb der konzentrischen Röhre 1 eine Luftströmung von der Lüfteinlassöffnung 2 in Richtung Luftauslassöffnung 3 erfolgt. Dabei erhöht sich die Strömungsgeschwindigkeit innerhalb der konzentrischen Röhre 1 von der mindestens einen Lüfteinlassöffnung 2 bis zur der mindestens einen Luftauslassöffnung 3. Dadurch werden die über Welle 7 mit einem Generator 8 verbundenen Rotoren 5 in Rotation versetzt, wobei mit dem Generator 8 ein elektrischer Strom erzeugt und über die Stromausgänge 9 sowie Schaltwerk 10 in ein öffentliches Stromnetz eingespeist wird.
Dabei wird die Kamin- und Saugwirkung der oberhalb des Luftauslassöffnung 3 wirkenden Luftströmung durch den Strömungsbeschleuniger 4 beschleunigt, in dem sich eine zweite natürliche Luftströmung vor dem Strömungsbeschleuniger 4 aufteilt und einerseits über die obere Körperkante 11 und anderseits über die untere Körperkante 12 des Strömungsbeschleunigers 4 strömt. Dabei legt der über die obere Körperkante 11 strömende Teil dieser Luftströmung einen größeren Strömungsweg als der über die untere Körperkante 12 strömende Teil dieser Luftströmung zurück, wodurch sich an der obere Körperkante 11 der dynamische Druck erhöht und sich äquivalent der statische Druck verringert. Gleichzeitig wird an der unteren Körperkante 12 der dynamische Druck verringert und äquivalent dazu der statische Druck erhöht. Durch die Erhöhung des statischen Druckes an der unteren Körperkante 11 der konzentrischen Röhre 1 erhöht sich auch die Kamin- und Saugwirkung innerhalb der konzentrischen Röhre 1, wodurch auch die Strömungsgeschwindigkeit innerhalb der konzentrischen Röhre 1 und in der Durchlassöffnung 12 erhöht wird. Das hat zur Folge, dass sich auch die Rotationsgeschwindigkeit der mit dem Generator 7 verbundenen Rotoren 5 erhöht und dadurch auch die mit dem Generator 7 erzeugte Menge an elektrischen Strom erhöht wird.

Bei einer Änderung der Windrichtung wirkt durch diese Luftströmung auf der Windfahne 16 eine Druckkraft, die ein in den Winddrehen der Windfahne 16 und damit des Strömungsbeschleunigers 4 erreicht. Dabei wirkt solange eine Druckkraft auf die Windfahne 16 bis die Windfahne 16 und damit des Strömungsbeschleunigers 4 parallel zur Windrichtung ausgerichtet ist, wodurch auch die aus der Strömungsgeschwindigkeit der Luftströmung maximal erreichbare Windlast auf die Rotorblätter 6 des Rotors 5 wirkt. Dadurch wird auch eine aus der Strömungsgeschwindigkeit der Luftströmung maximal erzielbare Menge an elektrischen Strom mit dem Generator 8 erzeugt und über das Schaltwerk 8 in das öffentliche Stromnetz eingespeist.

Denkbar ist es, dass auf der mit dem Generator 8 verbundenen Welle 7 vorzugsweise vier Rotoren 5 derart angeordnet sind, dass die Rotorblätter 6 auf der Welle 7 benachbarter Rotoren 5 in einer vertikalen Ebene nicht übereinander liegen.
Denkbar ist es auch, dass im Schaltwerk 8 die aus unterschiedlichen Strömungsgeschwindigkeiten der zweiten Luftströmung resultierenden Schwankungen der Stromstärke des mit dem Generator 8 erzeugten elektrischen Stromes kompensiert werden.

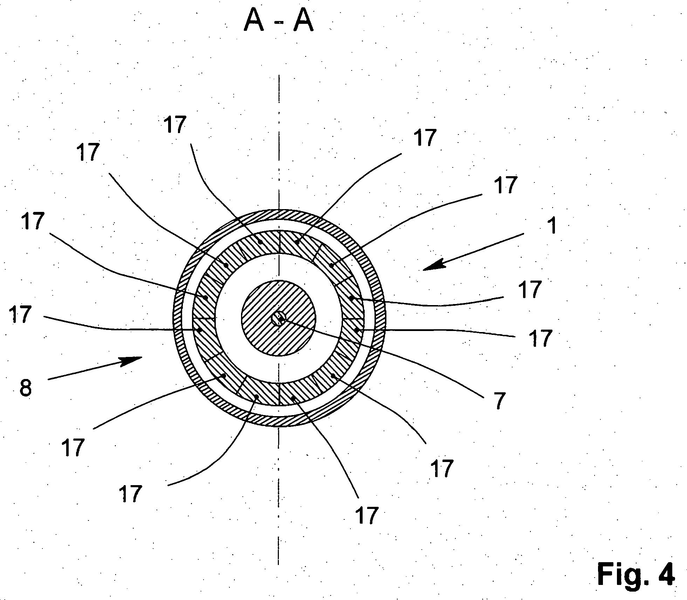

Auch ist es denkbar, die aus unterschiedlichen Strömungsgeschwindigkeiten der zweiten Luftströmung resultierenden unterschiedlichen Drehzahlen der Welle 7 gemäß der Fig. 4 derart zu begrenzen, dass:
- bei einer hohen Strömungsgeschwindigkeiten der zweiten Luftströmung und damit auch bei einer hohen Drehzahl der Welle Generatorspulen 17 des Generators 8 zugeschaltet und
- bei einer geringeren Strömungsgeschwindigkeiten der zweiten Luftströmung und damit auch bei einer geringeren Drehzahl der Welle Generatorspulen 17 des Generators 8 abgeschaltet werden.

Ebenso ist es denkbar, über den Generator 8 mindestens einen weiteren Generator 8 anzuordnen.

Dann ist es auch denkbar, die Rotorspulen dieser Generatoren 8 auf der Welle 7 axial verschiebbar auszuführen, so dass:
- bei einer hohen Strömungsgeschwindigkeiten der zweiten Luftströmung und damit auch bei einer hohen Drehzahl der Welle mindestens eine der axial verschiebbaren Rotorspulen in die jeweilige Generatorspulen 17 hinein geschoben und
- bei einer geringeren Strömungsgeschwindigkeiten der zweiten Luftströmung und damit auch bei einer geringeren Drehzahl der Welle mindestens eine der axial verschiebbaren Rotorspulen aus der jeweiligen Generatorspulen 17 hergezogen wird.

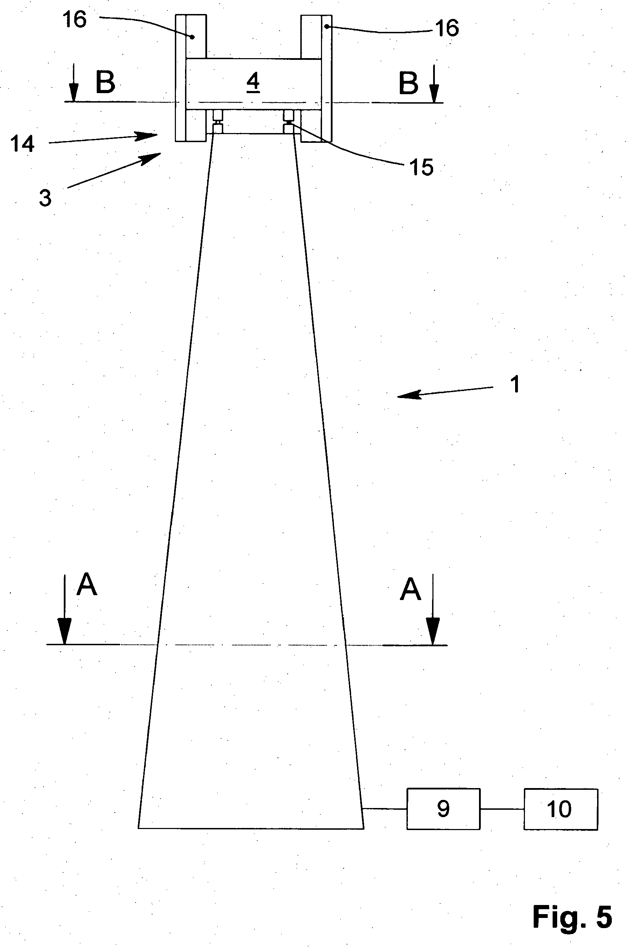

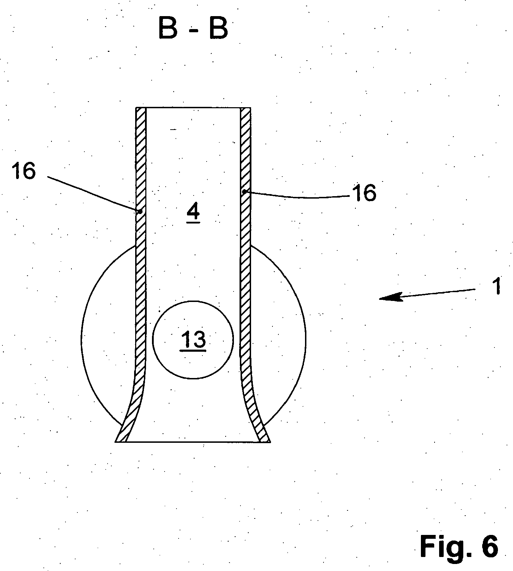

Alternativ ist es auch denkbar, gemäß der **Fig. 5** und **Fig. 6**, eine größere Breite des Strömungsbeschleunigers 4 und eine Aufspreizung der Windfahne 16 im vorderen Bereich zur zusätzlichen Beschleunigung der anströmenden Luft und zur Erhöhung des Luftdurchsatzes durch die Durchlassöffnung 13 zu nutzen.

### Liste der Bezugszeichen

- 1: konzentrische Röhre
- 2: Lufteinlassöffnung
- 3: Luftauslassöffnung
- 4: Strömungsbeschleuniger
- 5: Rotor
- 6: Rotorblatt
- 7: Welle
- 8: Generator
- 9: Stromausgang
- 10: Schaltwerk
- 11: obere Körperkante
- 12: untere Körperkante
- 13: Durchlassöffnung
- 14: Halterung
- 15: Lager
- 16: Windfahne
- 17: Generatorspule

## Patentansprüche

1. Windkraftanlage, bestehend aus einer Röhre (1) mit mindestens einer unteren Lufteinlassöffnung (2), mindestens einer oberen Luftauslassöffnung (3) und mindestens einem in der Röhre (1) angeordneten und mit einem Generator (8) verbunden Rotor (5) mit Rotorblättern (3), wobei auf der Luftauslassöffnung (3) der Röhre (1) eine gegenüber der Röhre (1) drehbar gelagerte Saugvorrichtung angeordnet ist, wobei die Saugvorrichtung ein im Querschnitt tragflächenförmiger Strömungsbeschleuniger (4) ist, dessen obere Körperkante (11) eine in Strömungsrichtung größere Länge als eine untere Körperkante (12) und der oberhalb der Luftauslassöffnung (3) eine Durchlassöffnung (13) aufweist, **dadurch gekennzeichnet, dass** die Durchlassöffnung (13) in axialer Verlängerung der Röhre (1) von der unteren Körperkante (12) bis zur oberen Körperkante (11) verläuft.

2. Windkraftanlage nach Anspruch 1,
**dadurch gekennzeichnet, dass** sich die Röhre (1) im Querschnitt von der mindestens einen unteren Lufteinlassöffnung (2) bis zu mindestens einen oberen Luftauslassöffnung (3) verjüngt.

3. Windkraftanlage nach Anspruch 2,
**dadurch gekennzeichnet, dass** die sich verjüngende Röhre (1) im Querschnitt von den unteren Lufteinlassöffnung (2) bis zu der Luftauslassöffnung (3) konzentrisch ist.

4. Windkraftanlage nach einem der vorhergehenden Ansprüche,
**dadurch gekennzeichnet, dass** der Strömungsbeschleuniger (4) eine Windfahne (16) aufweist, wodurch der Strömungsbeschleuniger (4) parallel zur Richtung der Luftströmung ausgerichtet wird.

5. Windkraftanlagen nach Anspruch 4,
**dadurch gekennzeichnet, dass** Strömungsbeschleuniger (4) einschließlich der Windfahne (16) in Strömungsrichtung eine größere Breite des Strömungsbeschleunigers (4) und eine Aufspreizung der Windfahne (16) aufweist

6. Windkraftanlage nach einem der vorhergehenden Ansprüche,
**dadurch gekennzeichnet, dass** in der Röhre (1) mehrere Rotoren (5) angeordnet sind, die über eine Welle (7) mit dem Generator (8) verbunden sind.

7. Windkraftanlage nach Anspruch 6,
**dadurch gekennzeichnet, dass** entsprechend der aus der Windgeschwindigkeit resultierenden Drehzahl der Welle (7) zur Aufrechterhaltung einer gleichmäßigen Rotation Generatorspulen (17) des Generators (8) zu-oder abschaltbar sind.

8. Windkraftanlage nach Anspruch 6,
**dadurch gekennzeichnet, dass** über den Generator (8) mindestens ein weiterer Generator (8) angeordnet ist.

9. Windkraftanlage nach Anspruch 8,
**dadurch gekennzeichnet, dass** die Rotorspulen der Generatoren (8) auf der Welle (7) derart axial verschiebbar sind, dass jede Rotorspule in die dazugehörige Generatorspulen (17) hingeschoben und herausgezogen werden kann.

## Claims

1. Wind turbine consisting of a pipe (1) having at least one lower air inlet (2), at least one upper air outlet (3) and at least one rotor (5) with rotor blades (3) arranged in the pipe (1) and connected to a generator (8), whereby a suction device rotatably mounted relative to the pipe is arranged on the air outlet (3) of the pipe, whereby the cross section of the suction device is a turbine-shaped flow accelerator (4), the upper edge of the body (11) of which has a length which is greater in the direction of flow than a lower body edge (12) and which has an outlet opening (13) above the air outlet (3),
**characterised in that** the outlet opening (13) extends in an axial extension of the pipe (1) from the lower body edge (12) to the upper body edge (11).

2. Wind turbine in accordance with Claim 1,
**characterised in that** in its cross section the pipe (1) tapers from at least one lower inlet opening (2) to at least one upper outlet opening (3).

3. Wind turbine in accordance with Claim 2,
**characterised in that** in its cross section the tapering tube (1) is concentric from the lower inlet opening (2) to the outlet opening (3).

4. Wind turbine in accordance with any one of the preceding claims,
**characterised in that** the flow accelerator (4) has a wind vane (16), by means of which the flow accelerator (4) is aligned in parallel to the direction of the air flow.

5. Wind turbine in accordance with Claim 4,
**characterised in that** the flow accelerator (4) including the wind vane (16) has a greater breadth of the flow accelerator (4) and a rupture in the wind vane (16).

6. Wind turbine in accordance with any one of the preceding claims,
**characterised in that** several rotors (5) are arranged in the pipe (1), which rotors are connected to the generator (8) by means of a shaft (7).

7. Wind turbine in accordance with Claim 6,
**characterised in that** in accordance with the number of rotations of the shaft (7) resulting from the wind speed, generator coils (17) of the generator (8) can be switched on or off in order to maintain an even rotation.

8. Wind turbine in accordance with Claim 6,
**characterised in that** at least one further generator (8) is arranged above the generator (8).

9. Wind turbine in accordance with Claim 8,
**characterised in that** the rotor coils of the generators (8) can be axially displaced on the shaft (7) such that each rotor coil can be pushed into and out of the associated generator coils (17).

## Revendications

1. Pour une centrale éolienne composée d'un tube (1) avec au moins un orifice d'entrée d'air inférieur (2), au moins un orifice de sortie d'air supérieur (3) et avec au moins un rotor (5) avec des pales de rotor (3) qui est installé dans le tube (3) et connecté à un générateur (8). Un dispositif d'aspiration mobile en rotation est installé vis-à-vis du tube (1) sur l'orifice de sortie d'air (3) du tube (1). Le dispositif d'aspiration est un amplificateur d'écoulement (4) avec une section transversale en forme d'aile. Son bord supérieur de corps (11) présente une longueur plus importante dans le sens du flux que le bord inférieur de corps (12). Il présente un orifice de passage (13) au-dessus de l'orifice de sortie d'air (3)
La centrale se **caractérise par le fait que** l'orifice de passage (13) s'étend dans le prolongement axial du tube (1), du bord inférieur de corps (12) jusqu'au bord supérieur de corps (11).

2. Centrale éolienne selon la revendication 1
La centrale se **caractérise par le fait que** la section transversale du tube (1) se resserre sur le trajet de l'orifice d'entrée d'air inférieur (2) (dont au moins un doit être présent) jusqu'à l'orifice de sortie d'air supérieur (3) (dont au moins un doit être présent).

3. Centrale éolienne selon la revendication 2
La centrale se **caractérise par le fait que** le tube (1), qui se resserre sur le trajet de l'orifice d'entrée d'air inférieur (2) à l'orifice de sortie d'air supérieur (3), présente une section transversale concentrique.

4. Centrale éolienne selon une des revendications précédentes
La centrale se **caractérise par le fait que** l'amplificateur de flux (4) possède une girouette (16) qui permet d'orienter l'amplificateur de flux (4) parallèlement par rapport au sens du flux d'air.

5. Centrale éolienne selon la revendication 4
La centrale se **caractérise par le fait que** l'amplificateur de flux (4) y compris la girouette (16) présente une largeur plus importante dans le sens du flux (amplificateur de flux (4)) et un écartement de la girouette (16).

6. Centrale éolienne selon une des revendications précédentes
La centrale se **caractérise par le fait que** plusieurs rotors (5) sont installés dans le tube (1). Ils sont connectés au générateur (8) par un arbre (7).

7. Centrale éolienne selon la revendication 6
La centrale se **caractérise par le fait que** les bobines génératrices (17) du générateur (8) peuvent être mises en/hors service en fonction de la vitesse de l'arbre (7) qui émane de la vitesse du vent afin de maintenir la rotation uniforme.

8. Centrale éolienne selon la revendication 6
La centrale se **caractérise par le fait qu'**au moins un générateur supplémentaire (8) est connecté par le biais du générateur (8).

9. Centrale éolienne selon la revendication 8
La centrale se **caractérise par le fait que** les bobines de rotor des générateurs (8) installés sur l'arbre (7) peuvent être déplacées dans le sens axial de manière à ce que chaque bobine de rotor puisse être enfilée et retirée de la bobine génératrice respective.
